Europäisches Patentamt

European Patent Office

Office européen des brevets

(11) Publication number: **0 260 873**
**A2**

## (12) EUROPEAN PATENT APPLICATION

(21) Application number: 87307976.8

(22) Date of filing: 09.09.87

(51) Int. Cl.⁴: **C09J 3/14** , **C08L 53/00**

(30) Priority: 13.09.86 GB 8622124

(43) Date of publication of application:
23.03.88 Bulletin 88/12

(84) Designated Contracting States:
AT BE CH DE ES FR GB GR IT LI LU NL SE

(71) Applicant: Lingner + Fischer GmbH
Hermannstr. 7
D-7580 Buehl (Baden)(DE)

(72) Inventor: Gollub, Hans-Jürgen
Lingner + Fischer GmbH Hermannstrasse 7
D-7580 Buehl (Baden)(DE)
Inventor: Hechenberger, Dieter A.
Lingner + Fischer GmbH Hermannstrasse 7
D-7580 Buehl (Baden)(DE)

(74) Representative: Dayneswood, Trevor et al
Beecham Pharmaceuticals Patent and Trade
Mark Department Biosciences Research
Centre Great Burgh Yew Tree Bottom Road
Epsom Surrey KT18 5XQ(GB)

(54) Adhesive composition.

(57) A releasable adhesive composition in the form of a paste and having improved adhesive and release properties comprising:

(i) 10 to 80% (preferably 15 to 30%) by weight of a styrene-based block copolymer, preferably a styrene-olefin-styrene block copolymer;

(ii) 10 to 80% (preferably 10 to 30%) by weight of a naphthenic or, preferably, paraffinic plasticiser, and optionally also an aromatic plasticiser; and

(iii) 10 to 80% (preferably from 20 to 75%) by weight of an aliphatic, cycloaliphatic or aromatic (chloro)hydrocarbon solvent:

EP 0 260 873 A2

## ADHESIVE COMPOSITION

The present invention relates to an adhesive composition, and in particular a releasable adhesive composition, which permits two substrates to be releasably bonded to each other.

Most known adhesive compositions will bond two substrates together in a non-releasable fashion, so that when an attempt is later made to separate the substrates either one or both of the substrates is damaged or, if the adhesive bond is overcome without damage, some adhesive will adhere to one or both of the substrates and will not be removable without damage to the substrate.

Certain releasable adhesives are available or have been described, but they are in general available only as pre-coated films on note-slips and adhesive tape (see EP 0 109 177 Al, Minnesota Mining and Manufacturing Co.). Certain releasable so-called 'graphics adhesives' are available but their application is limited to certain types of paper and, moreover, ageing can occur on long-term use.

An adhesive composition has now been developed which, while having sufficient adhesive strength to hold two substrates together securely, will allow the substrates subsequently to be separated without damage, even after being joined together for some time. Moreover, any adhesive residue remaining on either substrate after separation can also be removed therefrom without damage. Adhesive compositions of this type are useful for a wide variety of purposes, including, amongst others, temporarily attaching documents together; attaching note slips to documents, desks and the like, without the need to use special note slips precoated with adhesive; attaching posters, notices and the like to walls, windows, doors and the like; securing lightweight objects together; and removably securing photographs, postcards and other items onto display sheets or into an album, in cases where it may subsequently be desired to remove them without damage and without leaving adhesive residues.

The present invention provides an adhesive composition comprising:

(i) from 10 to 80% by weight of a styrene-based block copolymer,

(ii) from 10 to 80% by weight of a plasticiser selected from (a) a paraffinic plasticiser and/or a naphthenic plasticiser and (b) optionally also an aromatic plasticiser, and

(iii) from 10 to 80% by weight of a solvent selected from aliphatic, cycloaliphatic and aromatic hydrocarbons, and aliphatic, cycloaliphatic and aromatic chlorinated hydrocarbons. (All percentages are based on the total weight of the composition.)

The styrene-based block copolymer preferably constitutes from 15 to 30% by weight of the composition. Examples of suitable block copolymers are styrene-butadiene-styrene, styrene-isoprene-styrene, and styrene-olefin-styrene block copolymers. Such block copolymers are commercially available under the trade names Cariflex, Ameripol, Finaprene and Kraton.

Preferably the block copolymer is a styrene-olefin-styrene block copolymer, which may optionally be hydrogenated, such as a styrene-ethylene-butylene-styrene or styrene-ethylene-propylene-styrene block copolymer, each of which may optionally be hydrogenated. Such a block copolymer contains no unsaturation and therefore exhibits good resistance to oxidation and to U.V. degradation.

It can be advantageous to use a blend of two styrene-olefin-styrene block copolymers, for example a blend of a styrene-ethylene-butylene-styrene block copolymer and a styrene-ethylene-propylene-styrene block copolymer (each of which may optionally be hydrogenated); or a blend of a hydrogenated and a non-hydrogenated styrene-olefin-styrene block copolymer (for example a blend of hydrogenated styrene-ethylene-butylene-styrene and non-hydrogenated styrene-ethylene-butylene-styrene block copolymers); in a weight ratio of from 2:1 to 1:2. Such a blend can give particularly good oxidation and U.V. resistance.

The plasticiser preferably constitutes from 10 to 30% by weight of the composition. The plasticiser is essentially chosen from paraffinic and naphthenic plasticisers. It is believed that the plasticiser attaches itself to the central block (i.e. the non-styrene block) of the block copolymer. The central block primarily determines the internal cohesion of the composition, while the styrene end blocks determine the adhesion of the composition. The plasticiser apparently enlarges the central, cohesive block, thus reducing the relative proportion of the adhesive styrene end blocks, enabling the adhesion of the adhesive composition to be adjusted.

The plasticiser is preferably a paraffinic plasticiser. Such plasticisers have been found to show good resistance to oxidation and yellowing. Paraffinic plasticisers have also been found to show a strong affinity for the preferred styrene-olefin-styrene block copolymers, which exhibits itself in a lack of premature migration and evaporation.

The plasticiser component of the adhesive composition according to the invention may optionally include an aromatic plasticiser in addition to the paraffinic or naphthenic plasticiser. Such plasticisers, however, tend to display a particular affinity for the styrene end blocks of the copolymer and thus tend to increase the adhesion of the adhesive composition. In general, therefore, they should be present only in small amounts, suitably not exceeding 10% by weight, and preferably not exceeding 5% by weight, based on the total weight of the composition.

Paraffinic, naphthenic and aromatic plasticisers suitable for use in the compositions according to the invention are commercially available. Examples of suitable paraffinic plasticisers include Naftolen P-types and Catenex mineral oil P-types. Examples of suitable naphthenic plasticisers include Naftolen N-types and Catenex mineral oil N-types. Examples of suitable aromatic plasticisers include Naftolen ZD types and Nigrex oil types. ('Naftolen' is a trade mark of Metallgesellschaft AG, and 'Catenex' and Nigrex' are trade marks of Shell.)

The solvent advantageously constitutes from 20 to 75%, preferably from 40 to 65%, (for example from 20 to 60%) by weight of the composition. It is selected from aliphatic, cycloaliphatic and aromatic hydrocarbons or chlorinated hydrocarbons. Aliphatic hydrocarbon solvents are preferred. Examples of suitable solvents include petroleum naphtha fractions (e.g. petroleum naphtha 60/95 and 80/110), cyclohexane and toluene. The solvent chosen should preferably be of low toxicity.

The composition according to the invention may additionally comprise conventional auxiliary substances. The composition may, for example, include an antioxidant and/or a U.V.-stabiliser, such auxiliaries being particularly useful when the block copolymer includes unsaturation, as in styrene-butadiene-styrene and styrene-isoprene-styrene block copolymers. Further auxiliaries include, for example, mineral fillers, inorganic or organic pigments, and soluble dyes.

The composition of the invention may suitably be produced by adding the majority (conveniently approximately 90%) of the total solvent content to a conventional kneader or planetary mixer, slowly adding the block copolymer(s) thereto and continuing mixing until it is all dissolved, followed by the addition of the plasticiser and any auxiliary ingredients (such as antioxidant and U.V.-stabiliser), and then the remainder of the solvent to give the desired viscosity.

The adhesive composition according to the present invention may be produced in the form of a paste, gel or liquid, and may be sold to the consumer as such. Advantageously, it is of relatively high viscosity such that it has a non-drip consistency. It may, for example, suitably have a viscosity within the range of from 1000 to 10 000 dPas, preferably from 2000 to 5000 dPas. The adhesive may be packaged in any conventional solvent-tight manner, for example in a squeezable tube. It may be applied, suitably by brush or spreader or directly from a tube nozzle, to one (or both) of the substrates to be joined together, which may then be brought together simply with light mannual pressure. The adhesive remains fluid initially, permitting mutual adjustment of the two substrates after they have been brought together, yet initially has sufficient adhesive force and/or consistency to enable somewhat heavier items, such as posters, maps and the like, to be retained in position on a vertical surface before the adhesive dries. The solvent subsequently gradually evaporates from the adhesive to provide a secure bond on drying.

The adhesive composition according to the invention may alternatively be formulated as an adhesive stick.

The adhesive composition according to the invention will, particularly when it has a relatively high solids content, give good adhesion on rough or uneven surfaces, including, for example, woodchip wallpaper, roughcast plaster and rough timber. The composition will adapt to any surface profile, filling small gaps, joints and irregularities, and dry with only little shrinkage.

Substrates joined together with the adhesive composition according to the invention may subsequently readily be separated without damage, even some considerable time after drying of the adhesive. Any residual adhesive on either substrate can be removed by rubbing or peeling off.

Unless pigment or dye has been included in the adhesive composition, it is in general colourless and leaves no or little mark where it has been used.

The following table summaries examples of adhesive compositions according to the present invention. In each case, the compositions were prepared by adding the block copolymer to 90% of the solvent in a conventional kneader or planetary mixer until it had fully dissolved, followed by the addition of all other ingredients, and then the remaining solvent. In the table, the figures are percentages by weight, based on the total weight of the composition.

3

| Ingredients | Example No. | I | II | III | IV | V | VI | VII |
|---|---|---|---|---|---|---|---|---|
| 1. Block copolymer | | | | | | | | |
| a. styrene-butadiene-styrene (Cariflex TR 1102) | | – | 10.0 | – | – | – | – | – |
| b. hydrogenated styrene-ethylene-propylene-styrene (Kraton GX 1701) | | – | – | 12.5 | – | – | 9.3 | 8.9 |
| c. styrene-isoprene-styrene (Cariflex TR-1107) | | – | 13.0 | – | 24.0 | – | – | – |
| d. hydrogenated styrene-ethylene-butylene-styrene (Kraton G 1652) | | 24.0 | – | 12.0 | – | 22.8 | 13.9 | 13.3 |
| 2. Plasticiser | | | | | | | | |
| a. paraffinic (Catenex P-491) | | – | 18.0 | 19.5 | 20.0 | 10.0 | 19.1 | 17.6 |
| b. naphthenic (Naftolen N-400) | | 20.0 | – | – | – | 10.0 | – | – |
| c. aromatic (Naftolen ZD) | | – | 5.0 | – | – | – | – | – |
| 3. Solvent | | | | | | | | |
| a. petroleum naphtha 60/95 | | – | – | 50.3 | 55.1 | – | 56.5 | 59.0 |
| b. petroleum naphtha 80/10 | | 30.2 | 54.0 | – | – | 50.0 | – | – |
| c. cyclohexane | | 20.0 | – | – | – | 6.3 | – | – |
| d. toluene | | 5.0 | – | 5.0 | – | – | – | – |
| 4. Auxiliaries | | | | | | | | |
| a. antioxidant (Irganox 1076) | | 0.3 | – | 0.4 | 0.4 | 0.4 | 0.6 | 0.6 |
| b. UV-stabiliser (Tinuvin 328) | | 0.5 | – | 0.3 | 0.5 | 0.5 | 0.6 | 0.6 |

0 260 873

**Claims**

1. An adhesive composition comprising:

(i) from 10 to 80% by weight of a styrene-based block copolymer,

(ii) from 10 to 80% by weight of a plasticiser selected from (a) a paraffinic plasticiser and/or a naphthenic plasticiser and (b) optionally also an aromatic plasticiser, and

(iii) from 10 to 80% by weight of a solvent selected from aliphatic, cycloaliphatic and aromatic hydrocarbons, and aliphatic, cycloaliphatic and aromatic chlorinated hydrocarbons.

2. An adhesive composition as claimed in claim 1, wherein component (i) is present in an amount of from 15 to 30% by weight (based on the total weight of the composition).

3. An adhesive composition as claimed in claim 1 or claim 2, wherein component (i) comprises a hydrogenated or non-hydrogenated styrene-olefin-styrene block copolymer.

4. An adhesive composition as claimed in any one of claims 1 to 3, wherein component (ii) is present in an amount of from 10 to 30% by weight (based on the total weight of the composition).

5. An adhesive composition as claimed in any one of claims 1 to 4, wherein component (ii) comprises a paraffinic plasticiser.

6. An adhesive composition as claimed in any one of claims 1 to 5, wherein component (iii) is present in an amount of from 20 to 75% by weight (based on the total weight of the composition).

7. An adhesive composition as claimed in any one of claims 1 to 6, wherein component (iii) comprises an aliphatic hydrocarbon solvent.

8. An adhesive composition as claimed in any one of claims 1 to 7, which has a viscosity within the range of from 1000 to 10 000 dPas.